# EUROPEAN PATENT SPECIFICATION

(11) **EP 2 586 512 B1**
(45) Date of publication and mention of the grant of the patent: **09.03.2016**
(21) Application number: 11008658.4
(22) Date of filing: 28.10.2011
(51) Int. Cl.: B01D 33/073, B01D 33/11, B01D 33/46, B01D 33/41, B01D 33/42

(54) **Brine filtering device, applied to a meat product injection machine**
Salzlakenfiltervorrichtung, die auf eine Fleischproduktinjektionsmaschine angewendet wird
Dispositif de filtrage de saumure, appliqué à une machine d'injection de produit à base de viande

(43) Date of publication of application: 01.05.2013
(73) Proprietor: METALQUIMIA, S.A., 17007 Girona (ES)
(72) Inventor: Lagares Corominas, Narcis, 17007 Girona (ES)
(74) Representative: Torner Lasalle, Elisabet

(56) References cited:
- EP-A1- 1 275 305
- DE-A1- 2 505 565
- ES-A6- 2 015 398

## Description

### Technical Field

The present invention relates to a brine filtering device, applicable to an injection machine used to inject brine in pieces of meat product. The filtering device is used to filter the brine that is supplied to the injection machine as well as the surplus brine from the injection process, which is again recycled towards the injection machine during the operation thereof.

The proposed filtering device can be used for other machines which require precise filtering of brine to be used in a later step.

### Background of the invention

Patent ES-A-2015398 discloses fluid substance recycling and filtering equipment applicable to a meat mass injection machine. The filtering and recycling equipment comprises a pre-filtering unit with a pre-filtration drum arranged to rotate about a horizontal rotation axis and provided with a filtering wall around said horizontal rotation axis, and a safety filtering unit with a safety filtering drum arranged to rotate coaxially together with the pre-filtration drum and provided with a corresponding filtering wall around the horizontal rotation axis.

The brine from the injection machine is poured over an upper region of the pre-filtration drum such that it penetrates into same by gravity through its filtering wall, and exits the pre-filtration drum through an open side wall thereof. The pre-filtered brine is collected in a tub. The safety filtering drum is arranged such that its filtering wall rotates partially submerged in the pre-filtered brine contained in the tub.

The brine of the tub enters into the safety filtering drum through open side walls thereof. The tub has an outlet located below and very close to a lower region of the filtering wall of the safety filtering drum, and the brine is forced out of the safety filtering drum through its filtering wall and through the outlet by suction means. In the upper region of the safety filtering drum there is an automatic cleaning device which uses outside to inside pressurized water jets through the filtering wall.

Patent EP-A-1275305 describes a filtering apparatus applicable to a meat materials injection machine, comprising a pre-filtering unit with a pre-filtration drum arranged to rotate about a horizontal rotation axis and provided with a filtering wall around said horizontal rotation axis, and a safety filtering unit with a pair of safety filtering sleeves horizontally submerged in a tank. The brine from the injection machine is poured over an upper region of the pre-filtration drum such that it penetrates into same by gravity through its filtering wall, and exits the pre-filtration drum through open side walls thereof and through a lower region of the filtering wall. The pre-filtered brine is collected and poured into the mentioned tank inside which the safety filtering sleeves are located. The safety filtering sleeves are connected to an outlet and the brine is forced into the safety filtering sleeves through their filtering wall and through the outlet by suction means.

The safety filtering sleeves can independently pivot towards a straight position emerging from the brine for cleaning and maintenance tasks. A valve device allows operating alternately by means of one of the safety filtering sleeves while the other one is subjected to the cleaning and maintenance operations.

It has been observed that a single pre-filtration drum in the pre-filtering unit may not be enough to provide efficient pre-filtering of the brine from the injection machine, which can still incorporate particles or small pieces of meat mixed therewith, and this results in a higher amount of particles retained by the filtering wall of the safety filter, with the risk of obstruction and the need to perform the cleaning and maintenance operations more frequently.

Document DE-A-2505565 discloses a method for separating suspended material from water using a revolving drum having a microsieve filtering wall. The aqueous suspension is applied onto the outer face of the drum filtering wall, the separated material is then loosened from the drum filtering wall by a water jet from a nozzle directed onto the inner face of the drum filtering wall, and the separated material then flows onto a scraper blade bearing against the outer face of the drum. In a variant, the process is carried out in two stages: first the suspension is applied onto the inner face of a coarse drum with the washing jets on the outside, and then the liquid from this first stage is applied onto the outer face of a microsieve drum with the washing jets on the inside, as in the first variant.

A drawback with the cited DE-A-2505565 is that the use of water jets for washing the drum filtering wall makes unfeasible using the device for filtering brine because the water from the water jets will mix with the brine and will dilute the brine. Moreover the size of the sieve of such a revolving drum makes it unsuitable for filtering brines.

### Disclosure of the Invention

The present invention contributes to overcoming the aforementioned drawback by providing a brine filtering device, applicable to a meat product injection machine, integrating a pre-filtering unit and one or more safety filtering units to assure that the particles in the brine filtered by said units do not exceed a pre-determined size. According to the invention, the pre-filtering unit comprises at least first and second filtration drums arranged to rotate coaxially together about a horizontal rotation axis and provided with respective first and second filtering walls around said horizontal rotation axis, and an inlet hopper configured to receive brine to be filtered and to force it into said first pre-filtration drum through said first filtering wall in an upper region thereof. A tub is arranged below the first and second filtration drums to collect the brine filtered through the first filtering wall, which exits a lower region of the first pre-filtration drum.

The brine pre-filtered by the first pre-filtration drum passes from the mentioned collection tub into said second pre-filtration drum through the second cylindrical filtering wall in a lower region thereof and is poured from inside the second pre-filtration drum into a tank through an open side wall of the second pre-filtration drum. The safety filtering unit comprises at least one safety filter sleeve submerged in said tank. The safety filter sleeve is connected to an outlet of the tank and suction means are provided to suck the brine contained in the tank through a filtering wall of the safety filter sleeve and said outlet.

The brine is thus first passed through the first filtering wall from outside to inside the first pre-filtration drum, then it is passed through the second filtering wall from outside to inside the second pre-filtration drum, and finally it is passed through the filtering wall of the safety filter sleeve before being directed towards the outlet. The first and second filtering walls of the first and second pre-filtration drums can have the same mesh size, or the second filtering wall can have a smaller or larger mesh size than that of the first filtering wall. The filtering wall of the safety filter sleeve will have a mesh size that is smaller than or equal to that of the first and second filtering walls of the first and second pre-filtration drums.

The pre-filtered brine can pass from inside the first pre-filtration drum to the tub through the lower region of the corresponding first filtering wall and furthermore through completely or partially open side walls arranged at opposite ends of the first pre-filtration drum. The second pre-filtration drum has a closed side wall at the end adjacent to the first pre-filtration drum and the mentioned open side wall at the end adjacent to the tank of the safety filtering unit. The end of the tub adjacent to the open side wall of the second pre-filtration drum is sealed by dynamic sealing means arranged between the tub and the second pre-filtration drum, such that the brine can only enter second pre-filtration drum through the lower region of its cylindrical filtering wall submerged in the brine of the tub.

The pre-filtered brine exiting the second pre-filtration drum through its open side wall can optionally be passed through one or more additional filtering drums before being poured into the tank of the safety filtering unit. To that end, in one embodiment the pre-filtering unit comprises at least one third additional pre-filtration drum arranged to rotate coaxially together with the first and second filtration drums, and provided with an additional filtering wall around the horizontal rotation axis. The tub in turn comprises at least one additional compartment separated from the tub by the dynamic sealing means arranged between the tub and the second pre-filtration drum. This additional compartment of the tub thus receives the pre-filtered brine poured from the open side wall of the second pre-filtration drum.

The additional pre-filtration drum has a closed side wall at an end adjacent to the second pre-filtration drum and an open side wall adjacent to the tank of the safety filtering unit. Additional dynamic sealing means are arranged between the additional compartment of the tub and an end of the additional pre-filtration drum adjacent to said open side wall thereof. The pre-filtered brine is thus forced from the additional compartment of the tub into the additional pre-filtration drum through a lower region of the additional filtering wall and is poured from inside the additional pre-filtration drum into the tank of the safety filtering unit through the mentioned open side wall of the additional pre-filtration drum. Similarly, the pre-filtering unit can include several additional pre-filtration drums.

The filtering device of the present invention comprises a retaining member arranged to skim the outer surface of the first filtering wall of the first pre-filtration drum at an upper region thereof in order to accumulate both waste, such as small pieces of meat and other undesired particles mixed with the brine being filtered, and components of brine, such as salt lumps, at said upper part and gives time for said components of brine to pass through the first filtering wall of the first pre-filtration drum 1 and return to the brine in the tub so that substantially only waste remains accumulated by the retaining element after a short period of time. A driving mechanism is arranged to intermittently move said retaining member out of contact with the first filtering wall to let the first pre-filtration drum move waste accumulated by the retaining member to a scraper located downstream the retaining element. In one embodiment, the driving mechanism moves the retaining member out of contact with the first filtering wall once per turn of the pre-filtration drum.

In one embodiment, the safety filtering unit comprises at least two of the mentioned safety filtering sleeves connected to said outlet through respective independent valve devices, according to technique that is known through the mentioned documents. Each of said valve devices has a mobile body connected to a support on which the corresponding safety filter sleeve is installed. The valve device is operated by a pivoting movement of said support between a working position, in which the safety filter sleeve is submerged in the brine in the tank and the corresponding valve device is open and a cleaning and maintenance position, in which the safety filter sleeve is emerged from the brine of the tank and the corresponding valve device is closed.

Thus, the filtering device can operate with one of the safety filtering sleeves the support of which is arranged in the working position while the support of another safety filtering sleeve can be in the cleaning and maintenance position, allowing the extraction of the corresponding safety filter sleeve for its cleaning, maintenance or replacement. To that end, each safety filter sleeve is fixed to its corresponding support by fixing means that can be easily released manually without needing tools, for example by means of a simple snap-fitting, allowing an extraction and placement of the safety filter sleeve by axially sliding it along the support.

Each of the supports of the safety filtering sleeves comprises a body which extends internally along the corresponding safety filter sleeve and there is formed in this body an inner conduit communicated with the outlet through the valve device and having one or more inlets intentionally located to be above the level of the brine in the tank when the support is in the cleaning and maintenance position. Thus, the safety filter sleeve can be extracted by axially sliding it along the support without the risk of the brine penetrating towards the valve device when the support is in the cleaning and maintenance position.

### Brief Description of the Drawings

The previous and other features and advantages will be more fully understood from the following detailed description of several embodiments with reference to the attached drawings, in which:
Figure 1 is a perspective view of a brine filtering device according to an embodiment of the present invention;
Figure 2 is a partial schematic side view of the filtering device of Figure 1 with a retaining element in a skimming position; and
Figure 3 is a partial schematic side view similar to Figure 2 with the retaining element in a release position.
Figure 4 is a cross-section view of the device of Figure 1 with a group of elements of the safety filtering unit shown in the working position by means of solid lines and in a cleaning and maintenance position by means of dotted lines;
Figure 5 is a partially sectioned side view of the device of Figure 1 with a group of elements of the safety filtering unit shown in the cleaning and maintenance position and with a safety filter sleeve separated from the assembly;
Figure 6 is a plan view of the device of Figure 1 with the elements of the safety filtering unit shown in the working position;
Figure 7 is a perspective view of a brine filtering device according to another embodiment of the present invention;
Figure 8 is a cross-section view of a brine filtering device according to another embodiment of the present invention, with a group of elements of the safety filtering unit shown in a working position by means of solid lines and in a cleaning and maintenance position by means of dotted lines;
Figure 9 is a plan view of a variant of the filtering device of Figure 1;
Figure 10 is a schematic diagram illustrating the passage of the brine to be filtered through the series of pre-filtration drums of the pre-filtering unit and of the safety filtering sleeves in the safety filtering unit;

### Detailed Description of Exemplary Embodiments

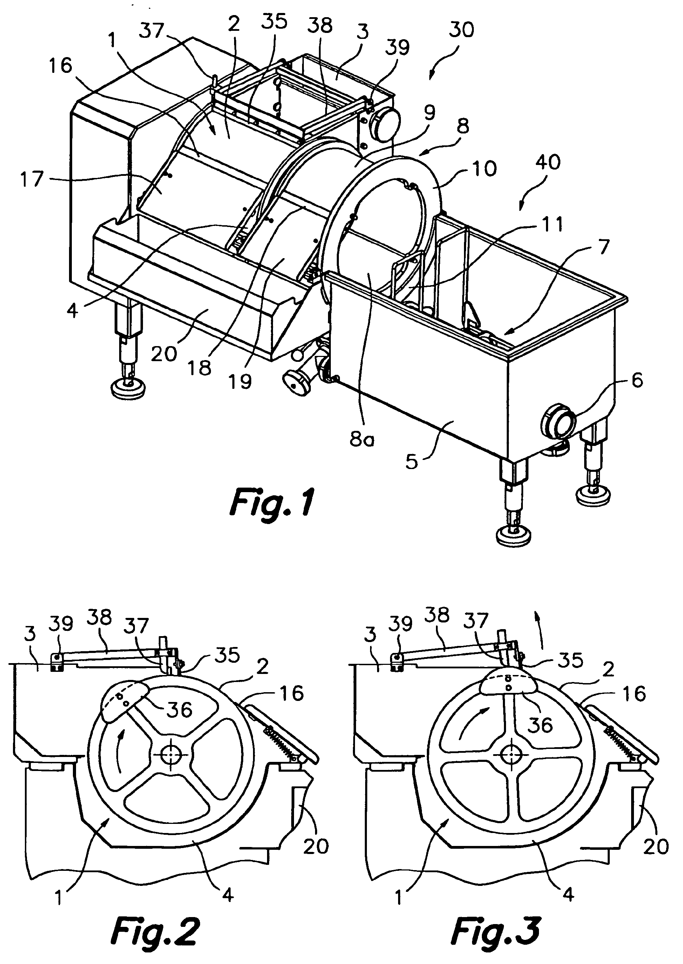

Referring first to Figures 1-6, there is shown a brine filtering device according to an embodiment of the present invention, which is applicable to a meat product injection machine, comprising a pre-filtering unit 30 with a first pre-filtration drum 1 arranged to rotate about a horizontal rotation axis and provided with a first filtering wall 2 around said horizontal rotation axis, an inlet hopper 3 configured to receive brine to be filtered and to force it into said first pre-filtration drum 1 through said first filtering wall 2 in an upper region thereof, and a tub 4 arranged to collect the brine filtered through the first filtering wall 2, which exits a lower region of the first pre-filtration drum 1. A lower portion of the first pre-filtration drum 1 is submerged in the brine contained in the tub 4.

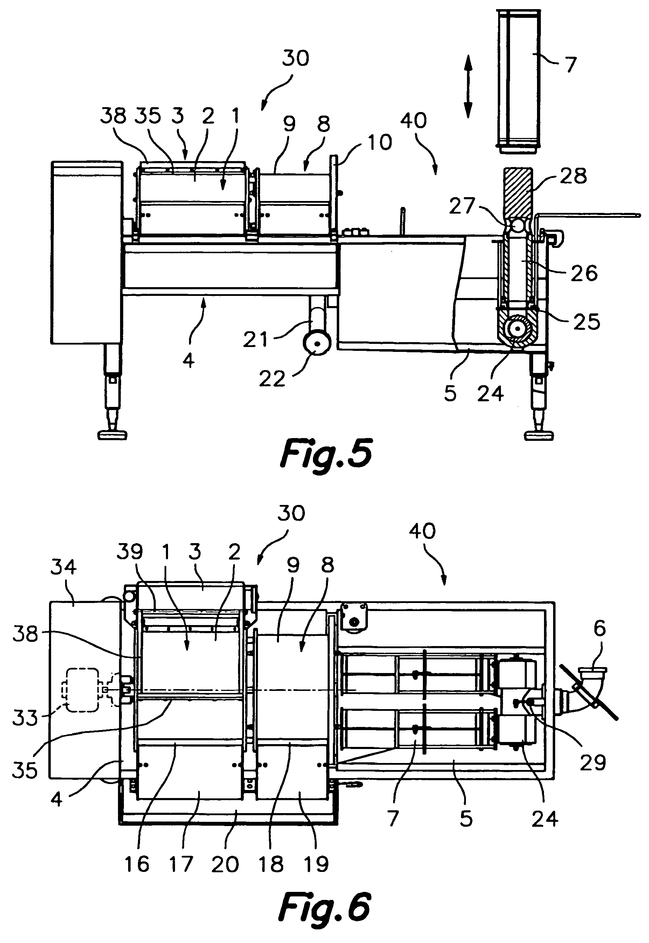

A second pre-filtration drum 8, provided with a second filtering wall 9 partially submenrgen in the brine contained in the tub 4, is arranged to rotate coaxially together with the first pre-filtration drum 1 around the horizontal rotation axis, such that the pre-filtered brine enters from the tub 4 into said second pre-filtration drum 8 in a lower region thereof, through said second cylindrical filtering wall 9, and is poured from the inside thereof into a tank 5 through an open side wall 8a of the second pre-filtration drum 8. A motor-reducer group 33 (schematically shown in dashed lines in Figure 6) is arranged inside a protecting cabinet 34 and has an output shaft operatively connected to drive the first pre-filtration drum 1, while the second pre-filtration drum 8 is coaxially attached to the first pre-filtration drum 1 for rotating therewith.

The filtering device further comprises at least one safety filtering unit 40 with at least one safety filter sleeve 7 submerged in said tank 5 into which the brine from said tub 4 is poured, and connected to an outlet 6 of the tank 5. Suction means are provided for sucking the brine contained in the tank 5 through said safety filter sleeve 7 and through said outlet 6, all according to a known structure.

The first pre-filtration drum 1 has at opposite ends thereof side walls 1a, 1b configured to allow the passage of the pre-filtered brine from inside the first pre-filtration drum 1 towards the tub 4. The pre-filtered brine can also exit the first pre-filtration drum 1 through a lower region of its filtering wall 2.

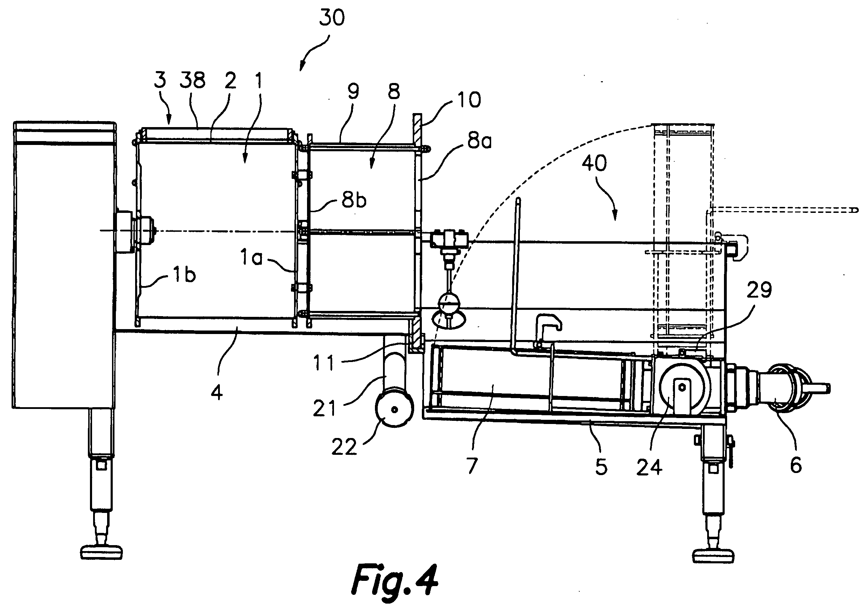

As can be seen, in particular in Figures 1 and 4, the second pre-filtration drum 8 has a closed side wall 8b adjacent to the first pre-filtration drum 1 and between the tub 4 and an end of the second pre-filtration drum 8 adjacent to said open side wall 8a there are arranged dynamic sealing means comprising a perimetric flange 10 extending radially outwards from said end of the second pre-filtration drum 8 adjacent to the open side wall 8a and a circular fraction channel 11 fixed to the tub 4 and inside which said perimetric flange 10 in a partially inserted arrangement rotates.

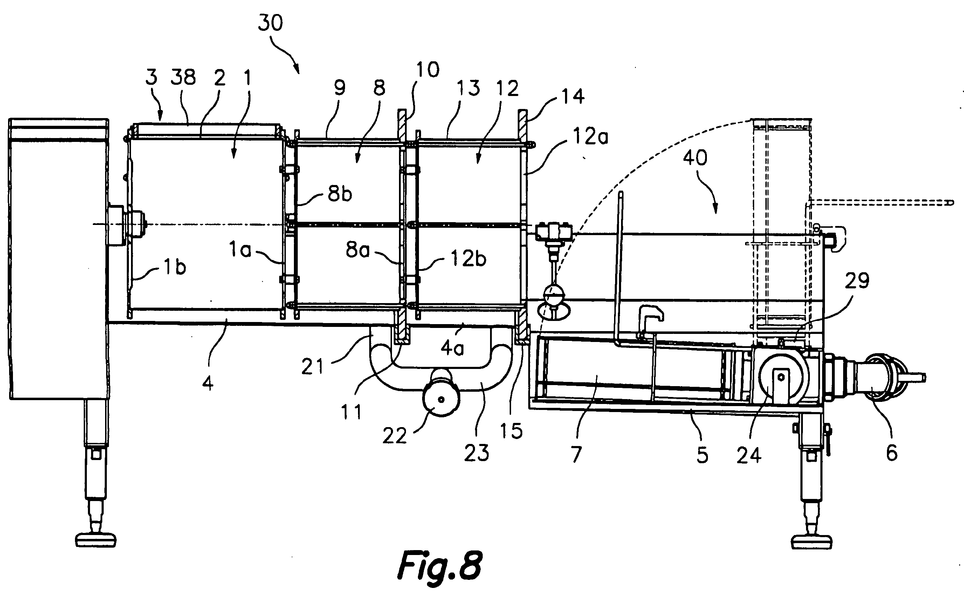

Figure 8 shows an embodiment in which the pre-filtering unit 30 comprises at least one additional pre-filtration drum 12 arranged to rotate coaxially together with the first and second filtration drums 1, 8 and provided with an additional filtering wall 13 around the horizontal rotation axis. It is evident that the structure of adjacent filters could have a larger number of members, according to needs.

The tub 4 arranged to collect the filtered brine comprises at least one additional compartment 4a separated from the tub 4 by said dynamic sealing means between the tub 4 and the second pre-filtration drum 8, in which said additional compartment 4a of the tub 4 receives the pre-filtered brine from the second pre-filtration drum 8, and in which the pre-filtered brine enters from the additional compartment 4a of the tub 4 into said additional pre-filtration drum 12 through the mentioned additional filtering wall 13 in a lower region thereof and is poured from the additional pre-filtration drum 12 into the tank 5 through an open side wall 12a of the additional pre-filtration drum 12.

In turn, the additional pre-filtration drum 12 has a closed side wall 12b adjacent to the second pre-filtration drum 8 and between the additional compartment 4a of the tub 4 and an end of the additional pre-filtration drum 12 adjacent to said open side wall 12a thereof there are arranged dynamic sealing means comprising a perimetric flange 14 extending radially outwards from said end of the additional pre-filtration drum 12 adjacent to the open side wall 12a thereof and a circular fraction channel 15 fixed to the additional compartment 4a of the tub 4 and inside which said perimetric flange 14 is partially inserted and rotates.

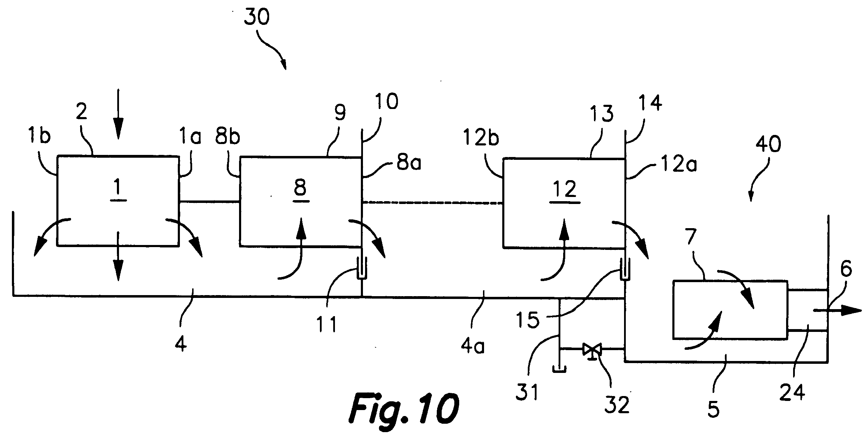

Due to the height of the lowest region of the mentioned circular fraction channels 11 and 15, a certain amount of brine remains in the tub 4 and in the additional compartment 4a after the operation of the filtering device is stopped. The tub 4 has in a lower region a drainage outlet 21 with a drain plug 22 and the additional compartment 4a of the tub 4 has in a lower region a drainage outlet 23 with a drain plug. In Figure 8, the drainage outlets 21, 23 of the tub 4 and of the additional compartment 4a are connected and share a single drain plug 22. Optionally, the bottom of the additional compartment 4a of the tub 4 is connected to the tank 5 of the safety filtering unit 40 by means of a drainage pipe 31 including a valve 32 operable for transferring said remaining amount of brine from the additional compartment 4a to the tank 5, as diagrammatically shown in Figure 10. A similar arrangement can be used to transfer remaining brine from the tub 4 to the tank 5 either if an additional compartment 4a is provided or not.

Figure 1 furthermore shows a first scraper 16 arranged to scrape the outer surface of the first filtering wall 2 of the first pre-filtration drum 1 and a ramp 17 arranged to direct the waste pulled off by said first scraper 16 to a collection tray 20. Said Figure 1 also shows a second scraper 18 arranged to scrape the outer surface of the second filtering wall 9 of the second pre-filtration drum 8 and a ramp 19 is arranged to direct the waste pulled off by said second scraper 18 to a collection tray 20.

In the event that the pre-filtering unit 30 (see Figure 8) includes an additional pre-filtration drum 12, an additional scraper is arranged to scrape the outer surface of the additional filtering wall 13 of the additional pre-filtration drum 12 and a ramp is arranged to direct the waste pulled off by said additional scraper to a collection tray 20, said additional elements not being shown in Figure 8.

Figures 1 to 6 also show the inlet hopper 3 associated with a retaining member 35 arranged to skim the outer surface of the first filtering wall 2 of the first pre-filtration drum 1 at an upper region thereof upstream the first scraper 16. Said retaining member 35 is installed on a movable frame 38 arranged to freely pivot with respect to the inlet hopper 3 about a pivot axis 39 parallel to the rotation axis of the first pre-filtration drum 1 and spaced apart from the retaining element 35.

In a skimming position (Figure 2), the retaining member 35 abuts on the outer surface of the first filtering wall 2 of the first pre-filtration drum 1 by gravity during rotation thereof, so that the retaining member 35 momentarily retains both waste, such as small pieces of meat and other undesired particles mixed with the brine being filtered, and components of brine, such as salt lumps, and gives time for said components of brine to pass through the first filtering wall 2 of the first pre-filtration drum 1 and return to the brine in the tub 4.

A driving mechanism is arranged to intermittently pivot said movable frame 38 to a release position (Figure 3) in which the retaining member 35 is moved out of contact with the first filtering wall 2 of the first pre-filtration drum 1 during a short period of time enough to release the waste momentarily accumulated by the retaining member 35 and substantially free of salt lumps so that the waste is moved by the first pre-filtration drum 1 to the first scraper 16 and to the collection tray 20.

As shown in Figures 2 and 3, said driving mechanism comprises a cam element 36 attached to a side wall of the first pre-filtration drum 1 and a cam follower 37 attached to the movable frame 38 on which said retaining member 35 is installed. The cam element 36 is configured and positioned so as to engage said cam follower 37 during rotation of the first pre-filtration drum 1 for a short portion of each turn. While the cam follower 37 is not engaged by the cam element 36 (Figure 2), the movable frame 38 keeps the retaining member 35 in the skimming position in contact with the first filtering wall 2 of the first pre-filtration drum 1 by gravity. When the cam follower 37 is engaged by the cam element 36, the movable frame 38 is pivoted up and the retaining member 35 moved from the skimming position to the release position out of contact with the first filtering wall 2 of the first pre-filtration drum 1.

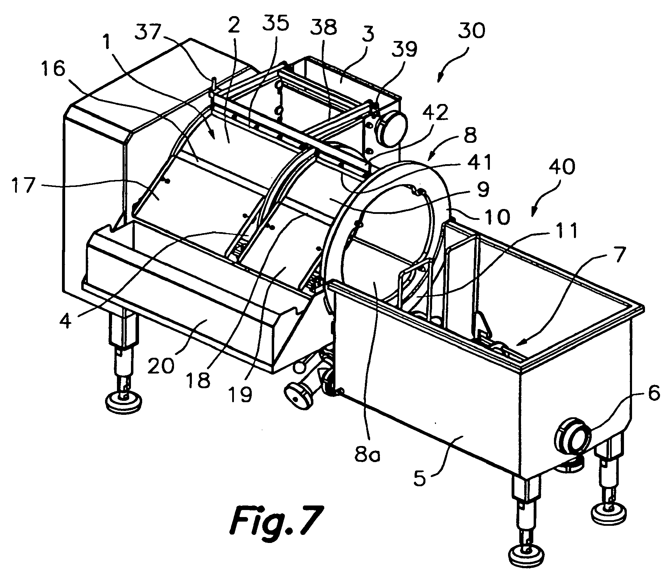

In a further embodiment shown in Figure 7, the first pre-filtration drum 1 has a first retaining member 35 installed on a movable frame driven to move between a skimming position and a release position by a driving mechanism comprising a cam element 36 and a cam follower 37 as described above in relation to Figures 1-6, and the second pre-filtration drum 8 has a second retaining member 41 arranged to skim the outer surface of the second filtering wall 9 of the second pre-filtration drum 8 at an upper region thereof upstream the second scraper 18. Said second retaining member 41 is installed on a support 42 attached to and extending from one side of the same movable frame 38 on which the first retaining member 35 is supported. Thus, the second retaining member 41 is moved together with the first retaining member 35 by said driving mechanism between a skimming position and a release position with the same purpose with respect to the second pre-filtration drum 8 than the first retaining element 35 with respect to the first pre-filtration drum 1.

With reference to Figures 4-6, according to the invention it is proposed that the safety filtering unit 40 comprises at least two safety filtering sleeves 7 connected to said outlet 6 through respective independent valve devices 24, each of which is operated by a pivoting movement of a support 25 on which the corresponding safety filter sleeve 7 is assembled between a working position, in which the safety filter sleeve 7 is submerged in the brine in the tank 5 and the corresponding valve device 24 is open, and a cleaning and maintenance position, in which the safety filter sleeve 7 is emerged from the brine of the tank 5 and the corresponding valve device 24 is closed.

Figure 5 shows that each support 25 is connected to a respective bulky body 28 having the purpose of reducing the volume of brine inside the corresponding safety filter sleeve 7. The mentioned bulky body 28 has one or more side inlets 27 which are communicated with an inner conduit 26 extending through the support 25. Thus, when each safety filter sleeve 7 is in the working position, it is communicated with the outlet 6 through the inner conduit 26 of the bulky body and of the support 25.

The inlets 27 of the inner conduit 26 are located such that they are above the level of the brine in the tank 5 when the support 25 is in the cleaning and maintenance position (Figure 5), thus allowing a complete extraction of the safety filter sleeve 7 by axially sliding it along the support 25 without the risk of the brine penetrating towards the valve device 24 when the support 25 is in the cleaning and maintenance position. The safety filter sleeve 7 is held by an interference coupling or the like to the support 25 next to its area of articulation adjacent to the valve 24.

The valve device 24 has a base body which is retained in the operative situation inside the tank 5 by a slot and a latch 29 (Figures 4, 6 and 10). Thus the complete assembly formed by the valve device 24, the supports 25, the bulky bodies 26 and optionally the safety filtering sleeves 7, can be removed from the tank 5 by manually releasing the latch 29 when the safety filtering sleeves 7 in the cleaning and maintenance position, by slightly moving the base body of the valve device 24 towards the pre-filtering unit 30 and vertically lifting the assembly, as shown in Figure 1.

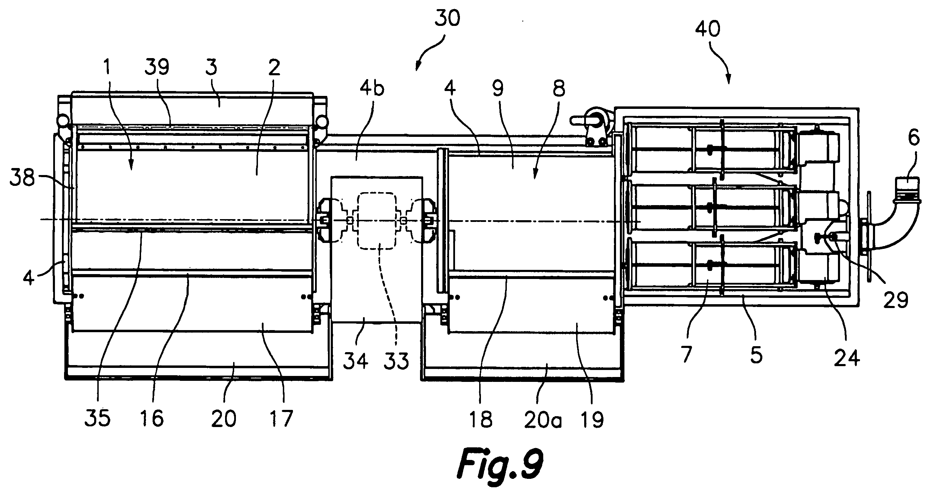

Figure 9 shows a variant of the embodiment of Figures 1 to 6 for greater productivity, in which the tub 4 defines a narrowing between a first portion of the tub 4 wherein the first pre-filtration drum 1 is located and a second portion of the tub 4 wherein the second pre-filtration drum 8 is located, and said first and second portions of the tub 4 are connected by a narrow tub portion 4b adjacent one side thereof. A motor-reducer group 33 (schematically shown in dashed lines in Figure 9) is arranged inside a protecting cabinet 34 which is located in a space between the first and second portions of the tub 4 provided by said narrowing of the tub 4. The motor-reducer group 33 has and output shaft protruding from opposed ends thereof and operatively connected to drive both the first pre-filtration drum 1 and the second pre-filtration drum 8 for rotating together. Thus, a better transmission of the torque from the motor-reducer group 33 to the first pre-filtration drum 1 and to the second pre-filtration drum 8, which are a bigger size in comparison with the embodiment of Figures 1 to 6, is provided.

The variant shown in Figure 9 includes three safety filter sleeves 7 submerged in the tank 5. The rest of features are similar to those of the embodiment described above in relation to Figures 1 to 6.

Figure 10 schematically shows, by means of arrows, the passage of the brine being filtered through the filtering walls 2, 9, 13 of the successive pre-filtration drums 1, 8, 12 in the pre-filtering unit 30 and through the safety filtering sleeves 7 of the safety filtering unit 40 of the filtration device of the present invention. A person skilled in the art will understand that an indefinite number of additional filtration drums can be added after the second pre-filtration drum 8 using an arrangement similar to that described above for the additional filtration drum 12.

A person skilled in the art will consider modifications and variations from the embodiments shown and described without departing from the scope of the present invention as it is defined in the attached claims.

## Claims

1. A brine filtering device, applicable to a meat product injection machine, comprising a pre-filtering unit (30) having:
a first pre-filtration drum (1) and a second pre-filtration drum (8) arranged to rotate coaxially together about a horizontal rotation axis and respectively provided with a first filtering wall (2) and a second filtering wall (9) around said horizontal rotation axis;
an inlet hopper (3) configured to receive brine to be filtered and to force it into said first pre-filtration drum (1) through said first filtering wall (2) at an upper region thereof;
a tub (4) arranged to collect the brine filtered through the first filtering wall (2) which exits the first pre-filtration drum (1) at a lower region thereof, wherein the second pre-filtration drum (8) is partially submerged in the brine contained in said tub (4), the brine from the tub (4) enters into said second pre-filtration drum (8) through said second filtering wall (9) in a lower region thereof, and the brine is poured from the second pre-filtration drum (8) into a tank (5) through an open side wall (8a) of the second pre-filtration drum (8);
a first scraper (16) arranged to scrape the outer surface of the first filtering wall (2) of the first pre-filtration drum (1) and a first ramp arranged to direct the waste pulled off by said first scraper (16) to a collection tray (20); and
a second scraper (18) arranged to scrape the outer surface of the second filtering wall (9) of the second pre-filtration drum (8) and a second ramp (19) arranged to direct the waste pulled off by said second scraper (18) to a collection tray (20);
and a safety filtering unit (40) having:
at least one safety filter sleeve (7) submerged in said tank (5) into which the brine is poured from the second pre-filtration drum (8), said safety filter sleeve (7) being connected to an outlet (6) of said tank (5); and
suction means for sucking the brine contained in the tank (5) through said safety filter sleeve (7) and through said outlet (6),
**characterized in that**:
a retaining member (35) is arranged to skim the outer surface of the first filtering wall (2) of the first pre-filtration drum (1) at an upper region thereof; and
a driving mechanism is arranged to intermittently move said retaining member (35) out of contact with the first filtering wall (2) to let the first pre-filtration drum (1) move waste accumulated by the retaining member to said first scraper (16).

2. The brine filtering device according to claim 1, **characterized in that** said driving mechanism comprises a cam element (36) attached to a side wall of the first pre-filtration drum (1) and a cam follower (37) attached to a movable frame (38) on which said retaining member (35) is installed, said cam element (36) being configured and positioned to engage said cam follower (37) for intermittently moving the retaining member (35) out of contact with the first filtering wall (2) during rotation of the first pre-filtration drum (1).

3. The brine filtering device according to claim 2, **characterized in that** a second retaining member (41) is arranged to skim the outer surface of the second filtering wall (9) of the second pre-filtration drum (8) at an upper region thereof upstream the second scraper (18), said second retaining member (41) being installed on a support (42) attached to said movable frame (38) to be moved together with the first retaining member (35) by said driving mechanism.

4. The brine filtering device according to claim 1, **characterized in that** the second pre-filtration drum (8) has a closed side wall (8b) adjacent to the first pre-filtration drum (1) and between the tub (4) and an end of the second pre-filtration drum (8) adjacent to said open side wall (8a) there are arranged dynamic sealing means.

5. The brine filtering device according to claim 4, **characterized in that** said dynamic sealing means comprise a perimetric flange (10) extending radially outwards from said end of the second pre-filtration drum (8) adjacent to the open side wall (8a) and a circular fraction channel (11) fixed to the tub (4) and inside which said perimetric flange (10) is partially inserted and rotates.

6. The brine filtering device according to any of claims 1 to 5, **characterized in that** the first pre-filtration drum (1) has at opposite ends thereof side walls (1a, 1b) configured to allow the passage of the brine from inside the first pre-filtration drum (1) towards the tub (4).

7. The brine filtering device according to claim 1, **characterized in that** the pre-filtering unit (30) comprises at least one additional pre-filtration drum (12) arranged to rotate coaxially together with the first and second filtration drums (1, 8) and provided with an additional filtering wall (13) around the horizontal rotation axis.

8. The brine filtering device according to claim 7, **characterized in that** the tub (4) comprises at least one additional compartment (4a) separated from the tub (4) by said dynamic sealing means between the tub (4) and the second pre-filtration drum (8), wherein said additional compartment (4a) of the tub (4) receives brine from the second pre-filtration drum (8), and wherein the brine enters from the additional compartment (4a) of the tub (4) into said additional pre-filtration drum (12) through said additional filtering wall (13) in a lower region thereof, and the brine is poured from the additional pre-filtration drum (12) into the tank (5) through an open side wall (12a) of the additional pre-filtration drum (12).

9. The brine filtering device according to claim 8, **characterized in that** the additional pre-filtration drum (12) has a closed side wall (12b) adjacent to the second pre-filtration drum (8) and between the additional compartment (4a) of the tub (4) and an end of the additional pre-filtration drum (12) adjacent to said open side wall (12a) thereof there are arranged dynamic sealing means.

10. The brine filtering device according to claim 9, **characterized in that** said dynamic sealing means comprise a perimetric flange (14) extending radially outwards from said end of the additional pre-filtration drum (12) adjacent to the open side wall (12a) thereof and a circular fraction channel (15) fixed to the additional compartment (4a) of the tub (4) and inside which said perimetric flange (14) is partially inserted and rotates.

11. The brine filtering device according to claim 7, **characterized in that** an additional scraper is arranged to scrape the outer surface of the additional filtering wall (13) of the additional pre-filtration drum (12) and a ramp is arranged to direct the waste pulled off by said additional scraper to a collection tray (20).

12. The brine filtering device according to claim 1, **characterized in that** said safety filtering unit (40) comprises at least two safety filtering sleeves (7) connected to said outlet (6) through respective independent valve devices (24), each of which is operated by a pivoting movement of a support (25) on which the corresponding safety filter sleeve (7) is assembled between a working position, in which the safety filter sleeve (7) is submerged in the brine in the tank (5) and the corresponding valve device (24) is open, and a cleaning and maintenance position, in which the safety filter sleeve (7) is emerged from the brine in the tank (5) and the corresponding valve device (24) is closed, each support (25) being connected to a bulky body (28) sized to reduce the volume of brine inside the corresponding safety filter sleeve (7).

13. The brine filtering device according to claim 12, **characterized in that** each safety filter sleeve (7) is communicated with the outlet (6) through an inner conduit (26) formed in said bulky body (28) and in the support (25), said inner conduit (26) having one or more inlets (27) located to be above the level of brine in the tank (5) when the support (25) is in the cleaning and maintenance position, allowing an extraction of the safety filter sleeve (7) by axially sliding it along the support (25) without the risk of the brine penetrating towards the valve device (24) when the support (25) is in the cleaning and maintenance position.

14. The brine filtering device according to claim 12 or 13, **characterized in that** a base body of the valve device (24) is retained in an operative situation inside the tank (5) by a latch (29) which can be manually released to allow removing the assembly formed by the valve device (24), the supports (25) and the bulky bodies (26) from the tank (5).

15. The brine filtering device according to claim 1 or 8, **characterized in that** the bottom of the tub (4) and/or the bottom of the additional compartment (4a) of the tub (4) is connected to the tank (5) of the safety filtering unit (40) by means of a drainage pipe (31) including a valve (32).

## Patentansprüche

1. Salzlakenfiltervorrichtung, die auf eine Fleischproduktinjektionsmaschine anwendbar ist, umfassend eine Vorfiltereinheit (30) aufweisend:
eine erste Vorfiltertrommel (1) und eine zweite Vorfiltertrommel (8), welche dazu angeordnet sind, sich gemeinsam um eine horizontale Drehachse koaxial zu drehen und jeweils mit einer ersten Filterwand (2) und einer zweiten Filterwand (9) um die genannte horizontale Drehachse versehen sind;
einen Einlauftrichter (3), welcher dazu ausgebildet ist, die zu filtrierende Salzlake aufzunehmen und diese in die genannte erste Vorfiltertrommel (1) durch die genannte erste Filterwand (2) in einem oberen Bereich derselben zu zwingen;
eine Wanne (4), welche dazu angeordnet ist, die durch die erste Filterwand (2) gefilterte Salzlake, welche die erste Vorfiltertrommel (1) in einem unteren Bereich derselben verlässt, zu sammeln, wobei die zweite Vorfiltertrommel (8) in der in der genannten Wanne (4) enthaltenen Salzlake teilweise eingetaucht ist, die Salzlake aus der Wanne (4) in die genannte zweite Vorfiltertrommel (8) durch die genannte zweite Filterwand (9) in einem unteren Bereich derselben eintritt, und die Salzlake von der zweiten Vorfiltertrommel (8) in einen Behälter (5) durch eine offene Seitenwand (8a) der zweiten Vorfiltertrommel (8) gegossen wird;
einen ersten Abstreifer (16), welcher dazu angeordnet ist, die äußere Oberfläche der ersten Filterwand (2) der ersten Vorfiltertrommel (1) abzustreifen und eine erste Rampe, welche dazu angeordnet ist, die von dem genannten ersten Abstreifer (16) abgezogene Abfallstoffe zu einer Sammelschale (20) zu führen; und
einen zweiten Abstreifer (18), welcher dazu angeordnet ist, die äußere Oberfläche der zweiten Filterwand (9) der zweiten Vorfiltertrommel (8) abzustreifen und eine zweite Rampe (19), welche dazu angeordnet ist, die von dem genannten zweiten Abstreifer (18) abgezogene Abfallstoffe zu einer Sammelschale (20) zu führen;
und eine Sicherheitsfiltereinheit (40) aufweisend:
zumindest eine Sicherheitsfilterhülse (7), welche in dem genannten Behälter (5), in welchen die Salzlake von der zweiten Vorfiltertrommel (8) gegossen wird, eingetaucht ist, wobei die genannte Sicherheitsfilterhülse (7) mit einem Auslauf (6) des genannten Behälters (5) verbunden ist; und
Absaugmittel zum Absaugen der in dem Behälter (5) enthaltenen Salzlake durch die genannte Sicherheitsfilterhülse (7) und durch den genannten Auslauf (6), **dadurch gekennzeichnet, dass**:
ein Rückhalteelement (35) dazu angeordnet ist, bei der äußeren Oberfläche der ersten Filterwand (2) der ersten Vorfiltertrommel (1) in einem oberen Bereich derselben einen Abtrag durchzuführen; und
ein Antriebsmechanismus dazu angeordnet ist, das genannte Rückhalteelement (35) außer Kontakt mit der ersten Filterwand (2) intermittierend zu bewegen, damit die erste Vorfiltertrommel (1) die von dem Rückhalteelement gesammelten Abfallstoffe zum ersten Abstreifer (16) bewegen kann.

2. Salzlakenfiltervorrichtung nach Anspruch 1, **dadurch gekennzeichnet, dass** der genannte Antriebsmechanismus ein Nockenelement (36), welches mit einer Seitenwand der ersten Vorfiltertrommel (1) verbunden ist, und einen Nockenstößel (37), welcher mit einem bewegbaren Rahmen (38) verbunden ist, auf welchem das genannte Rückhalteelement (35) installiert ist, umfasst, wobei das genannte Nockenelement (36) dazu ausgebildet und positioniert ist, mit dem genannten Nockenstößel (37) in Eingriff zu kommen, um das Rückhalteelement (35) außer Kontakt mit der ersten Filterwand (2) während der Drehung der ersten Vorfiltertrommel (1) intermittierend zu bewegen.

3. Salzlakenfiltervorrichtung nach Anspruch 2, **dadurch gekennzeichnet, dass** ein zweites Rückhalteelement (41) dazu angeordnet ist, bei der äußeren Oberfläche der zweiten Filterwand (9) der zweiten Vorfiltertrommel (8) in einem oberen Bereich derselben, aufwärts von dem zweiten Abstreifer (18), einen Abtrag durchzuführen, wobei das genannte zweite Rückhalteelement (41) auf einem Träger (42) installiert ist, welcher mit dem genannten bewegbaren Rahmen (38) verbunden ist, um zusammen mit dem ersten Rückhalteelement (35) von dem genannten Antriebsmechanismus bewegt zu werden.

4. Salzlakenfiltervorrichtung nach Anspruch 1, **dadurch gekennzeichnet, dass** die zweite Vorfiltertrommel (8) eine geschlossene Seitenwand (8b) aufweist, welche der ersten Vorfiltertrommel (1) benachbart ist und zwischen der Wanne (4) und einem Ende der zweiten Vorfiltertrommel (8), das der genannten offenen Seitenwand (8a) benachbart ist, dynamische Abdichtungsmittel angeordnet sind.

5. Salzlakenfiltervorrichtung nach Anspruch 4, **dadurch gekennzeichnet, dass** die genannten dynamischen Abdichtungsmittel einen umlaufenden Flansch (10), welcher sich von dem genannten Ende der zweiten Vorfiltertrommel (8), das der offenen Seitenwand (8a) benachbart ist, radial auswärts erstreckt, und einen kreisförmigen Teilkanal (11), welcher an der Wanne (4) befestigt ist und innerhalb welchem der genannte umlaufende Flansch (10) teilweise eingesteckt ist und sich dreht, umfassen.

6. Salzlakenfiltervorrichtung nach einem der Ansprüche 1 bis 5, **dadurch gekennzeichnet, dass** die erste Vorfiltertrommel (1) an entgegengesetzten Enden derselben Seitenwände (1a, 1b) aufweist, welche dazu ausgebildet sind, den Durchgang der Salzlake von innerhalb der ersten Vorfiltertrommel (1) zur Wanne (4) zu ermöglichen.

7. Salzlakenfiltervorrichtung nach Anspruch 1, **dadurch gekennzeichnet, dass** die Vorfiltereinheit (30) zumindest eine zusätzliche Vorfiltertrommel (12) umfasst, welche dazu angeordnet ist, sich zusammen mit der ersten Filtertrommel (1) und der zweiten Filtertrommel (8) koaxial zu drehen, und mit einer zusätzlichen Filterwand (13) um der horizontalen Drehachse versehen ist.

8. Salzlakenfiltervorrichtung nach Anspruch 7, **dadurch gekennzeichnet, dass** die Wanne (4) zumindest eine zusätzliche Abteilung (4a) umfasst, welche von der Wanne (4) durch die genannten dynamischen Abdichtungsmittel zwischen der Wanne (4) und der zweiten Vorfiltertrommel (8) getrennt ist, wobei die genannte zusätzliche Abteilung (4a) der Wanne (4) Salzlake von der zweiten Vorfiltertrommel (8) aufnimmt, und wobei die Salzlake von der zusätzlichen Abteilung (4a) der Wanne (4) in die genannte zusätzliche Vorfiltertrommel (12) durch die genannte zusätzliche Filterwand (13) in einem unteren Bereich derselben eintritt, und wobei die Salzlake von der zusätzlichen Vorfiltertrommel (12) in den Behälter (5) durch eine offene Seitenwand (12a) der zusätzlichen Vorfiltertrommel (12) gegossen wird.

9. Salzlakenfiltervorrichtung nach Anspruch 8, **dadurch gekennzeichnet, dass** die zusätzliche Vorfiltertrommel (12) eine geschlossene Seitenwand (12b), welche der zweiten Vorfiltertrommel (8) benachbart ist, aufweist, und zwischen der zusätzlichen Abteilung (4a) der Wanne (4) und einem Ende der zusätzlichen Vorfiltertrommel (12), welches der genannten offenen Seitenwand (12a) derselben benachbart ist, dynamische Abdichtungsmittel angeordnet sind.

10. Salzlakenfiltervorrichtung nach Anspruch 9, **dadurch gekennzeichnet, dass** die genannten dynamischen Abdichtungsmittel einen umlaufenden Flansch (14), welcher sich von dem genannten Ende der zusätzlichen Vorfiltertrommel (12), das der offenen Seitenwand (12a) derselben benachbart ist, radial auswärts erstreckt, und einen kreisförmigen Teilkanal (15), welcher an der zusätzlichen Abteilung (4a) der Wanne (4) befestigt ist und innerhalb welchem der genannte umlaufende Flansch (14) teilweise eingesteckt ist und sich dreht, umfassen.

11. Salzlakenfiltervorrichtung nach Anspruch 7, **dadurch gekennzeichnet, dass** ein zusätzlicher Abstreifer dazu angeordnet ist, die äußere Oberfläche der zusätzlichen Filterwand (13) der zusätzlichen Vorfiltertrommel (12) abzustreifen, und eine Rampe dazu angeordnet ist, die von dem genannten zusätzlichen Abstreifer abgezogene Abfallstoffe zu einer Sammelschale (20) zu führen.

12. Salzlakenfiltervorrichtung nach Anspruch 1, **dadurch gekennzeichnet, dass** die genannte Sicherheitsfiltereinheit (40) zumindest zwei Sicherheitsfilterhülsen (7) umfasst, welche mit dem genannten Auslauf (6) durch jeweilige unabhängige Ventilvorrichtungen (24) verbunden sind, wobei jede durch eine Schwenkbewegung eines Trägers (25), auf welchem die entsprechende Sicherheitsfilterhülse (7) montiert ist, zwischen einer Arbeitsstellung, in welcher die Sicherheitsfilterhülse (7) in der Salzlake in dem Behälter (5) eingetaucht ist und die entsprechende Ventilvorrichtung (24) offen ist, und einer Reinigungs-und Wartungsstellung, in welcher die Sicherheitsfilterhülse (7) von der Salzlake in dem Behälter (5) austritt und die entsprechende Ventilvorrichtung (24) geschlossen ist, angetrieben wird, wobei jeder Träger (25) mit einem massigen Körper (28) verbunden ist, welcher dazu dimensioniert ist, das Volumen der Salzlake innerhalb der entsprechenden Sicherheitsfilterhülse (7) zu verringern.

13. Salzlakenfiltervorrichtung nach Anspruch 12, **dadurch gekennzeichnet, dass** jede Sicherheitsfilterhülse (7) mit dem Auslauf (6) durch eine innere Leitung (26), die in dem genannten massigen Körper (28) und in dem Träger (25) gebildet ist, kommuniziert, wobei die genannte innere Leitung (26) einen oder mehrere Einläufe (27) aufweist, welche so positioniert sind, dass sie über das Niveau der Salzlake in dem Behälter (5) sind, wenn sich der Träger (25) in der Reinigungs- und Wartungsstellung befindet, wobei eine Entnahme der Sicherheitsfilterhülse (7) durch axiales Verschieben derselben entlang des Trägers (25) ermöglicht wird, ohne die Gefahr, dass die Salzlake zur Ventilvorrichtung (24) eindringt, wenn sich der Träger (25) in der Reinigungs- und Wartungsstellung befindet.

14. Salzlakenfiltervorrichtung nach Anspruch 12 oder 13, **dadurch gekennzeichnet, dass** ein Grundkörper der Ventilvorrichtung (24) in einer operativen Situation innerhalb des Behälters (5) durch einen Verschluss (29) zurückgehalten wird, welcher manuell befreit werden kann, um die Anordnung aus Ventilvorrichtung (24), Trägern (25) und massiven Körpern (26) von dem Behälter (5) zu entfernen.

15. Salzlakenfiltervorrichtung nach Anspruch 1 oder 8, **dadurch gekennzeichnet, dass** der Boden der Wanne (4) und/oder der Boden der zusätzlichen Abteilung (4a) der Wanne (4) mit dem Behälter (5) der Sicherheitsfiltereinheit (40) durch ein Drainagerohr (31) aufweisend ein Ventil (32) verbunden ist.

## Revendications

1. Un dispositif de filtrage de saumure, applicable à une machine à injecter une viande, comportant une unité de pré-filtrage (30) ayant:
un premier tambour de pré-filtrage (1) et un deuxième tambour de pré-filtrage (8) agencés pour tourner coaxialement ensemble autour d'un axe et respectivement pourvu d'une première paroi filtrante (2) et d'une deuxième paroi filtrante (9) autour de cet axe de rotation horizontal;
une trémie d'entrée (3) configurée pour y recevoir la saumure à filtrer et la faire entrer de force dans ce tambour de pré-filtrage (1) à travers cette première paroi filtrante (2) dans une région supérieure de celle-ci;
un bassin (4) agencé pour récupérer la saumure filtrée à travers la première paroi filtrante (2) qui sort du premier tambour de pré-filtrage (1) dans une région inférieure de celui-ci, dans lequel le deuxième tambour de pré-filtrage (8) est submergé en partie dans la saumure contenue dans ce bassin (4), la saumure du bassin (4) entre dans ce deuxième tambour de pré-filtrage (8) à travers cette deuxième paroi filtrante (9) dans une région inférieure de celle-ci, et la saumure est versée depuis un deuxième tambour de pré-filtrage (8) dans un réservoir (5) à travers une paroi latérale ouverte (8a) du deuxième tambour de pré-filtrage (8);
un premier grattoir (16) agencé pour gratter la surface extérieure de la première paroi de filtrage (2) du premier tambour de pré-filtrage (1) et une première rampe agencée pour cheminer les déchets arrachés par ce premier grattoir (16) vers un bac de récupération (20); et
un deuxième grattoir (18) agencé pour gratter la surface extérieure de la deuxième paroi de filtrage (9) du deuxième tambour de pré-filtrage (8) et une deuxième rampe (19) agencé pour acheminer les déchets arrachés par un deuxième grattoir (18) à un bac de récupération (20);
et une unité de filtrage de sécurité (40) ayant:
au moins un manchon de filtre de sécurité (7) submergé dans ce réservoir (5) dans lequel la saumure est versée depuis un deuxième tambour de pré-filtrage (8), ce manchon de filtre de sécurité (7) étant relié à une sortie (6) de ce réservoir (5); et
des moyens d'aspiration pour aspirer la saumure contenue dans le réservoir (5) à travers ce manchon de filtre de sécurité (7) et à travers cette sortie (6),
**caractérisé en ce que**:
un élément de rétention (35) est agencé pour écumer la surface extérieure de la première paroi filtrante (2) du premier tambour de pré-filtrage (1) dans une région supérieure de celui-ci; et
un mécanisme d'entraînement est agencé pour écarter de façon intermittente cet élément de rétention (35) du contact avec la première paroi filtrante (2) pour permettre au premier tambour de pré-filtrage (1) de déplacer les déchets accumulés par cet élément de rétention vers ce premier grattoir (16).

2. Le dispositif de filtrage de saumure conformément à la revendication 1, **caractérisé en ce que** ce mécanisme d'entraînement comporte un élément à came (36) fixé sur une paroi latérale du premier tambour de pré-filtrage (1) et un galet de came (37) fixé sur un châssis mobile (38) sur lequel cet élément de rétention (35) est installé, cet élément à came (36) étant configuré et positionné pour engager ce galet de came (37) pour écarter de façon intermittente cet élément de rétention (35) du contact avec la première paroi filtrante (2) durant la rotation du premier tambour de pré-filtrage (1).

3. Le dispositif de filtrage de saumure conformément à la revendication 2, **caractérisé en ce qu'**un deuxième élément de rétention (41) est agencé pour écumer la surface extérieure de la deuxième paroi filtrante (9) du deuxième tambour de pré-filtrage (8) dans une région supérieure de celui-ci en amont du deuxième grattoir (18), ce deuxième élément de rétention (41) étant installé sur un support (42) fixé sur ce châssis mobile (38) pour être déplacé ensemble avec le premier élément de rétention (35) par ce mécanisme d'entraînement.

4. Le dispositif de filtrage de saumure conformément à la revendication 1, **caractérisé en ce qu'**un deuxième tambour de pré-filtrage (8) possède une paroi latérale fermée (8b) adjacente au premier tambour de pré-filtrage (1) et entre le bassin (4) et une extrémité du deuxième tambour de pré-filtrage (8) adjacent à cette paroi latérale ouverte (8a) sont aménagés des moyens d'étanchéité dynamique.

5. Le dispositif de filtrage de saumure conformément à la revendication 4, **caractérisé en ce que** ces moyens d'étanchéité dynamique comportent une bride périmétrique (10) s'étendant de façon radiale vers l'extérieur de cette extrémité du deuxième tambour de pré-filtrage (8) adjacent à la paroi latérale ouverte (8a) et une fraction de canal circulaire (11) fixée sur le bassin (4) et à l'intérieur duquel cette bride périmétrique (10) est en partie insérée et tourne.

6. Le dispositif de filtrage de saumure conformément à une quelconque des revendications 1 à 5, **caractérisé en ce que** le premier tambour de pré-filtrage (1) possède à ses extrémités opposées des parois latérales (1a, 1b) configurées pour permettre le passage de la saumure de l'intérieur du premier tambour de pré-filtrage (1) vers le bassin (4).

7. Le dispositif de filtrage de saumure conformément à la revendication 1, **caractérisé en ce que** l'unité de pré-filtrage (30) comporte au moins un tambour de pré-filtrage additionnel (12) agencé pour tourner coaxialement ensemble avec les premier et deuxième tambours de filtrage (1,8) et pourvus d'une paroi de filtrage additionnelle (13) autour de l'axe de rotation horizontal.

8. Le dispositif de filtrage de saumure conformément à la revendication 7, **caractérisé en ce que** le bassin (4) comporte au moins un compartiment additionnel (4a) séparé du bassin (4) par ces moyens d'étanchéité dynamique entre le bassin (4) et le deuxième tambour de pré-filtrage (8) dans lequel ce compartiment additionnel (4a) du bassin (4) reçoit la saumure du deuxième tambour de pré-filtrage (8) et dans lequel la saumure entre depuis le compartiment additionnel (4a) du bassin (4) dans ce tambour de pré-filtrage additionnel (12) à travers cette paroi de filtrage additionnelle (13) dans une région inférieure de celui-ci et la saumure est versée depuis le tambour de pré-filtrage additionnel (12) dans le réservoir (5) à travers une paroi latérale ouverte (12a) du tambour de pré-filtrage additionnel (12).

9. Le dispositif de filtrage de saumure conformément à la revendication 8, **caractérisé en ce que** le tambour de pré-filtrage additionnel (12) possède une paroi latérale fermée (12b) adjacente au deuxième tambour de pré-filtrage (8) et entre le compartiment additionnel (4a) du bassin (4) et une extrémité du tambour de pré-filtrage additionnel (12) adjacent à cette paroi latérale ouverte (12a) de celui-ci sont aménagés des moyens d'étanchéité dynamique.

10. Le dispositif de filtrage de saumure conformément à la revendication 9, **caractérisé en ce que** ces moyens d'étanchéité dynamique comportent une bride périmétrique (14) s'étendant radialement vers l'extérieur de cette extrémité du tambour de pré-filtrage additionnel (12) adjacente à la paroi latérale ouverte (12a) de celui-ci et une fraction de canal circulaire (15) fixée à un compartiment additionnel (4a) du bassin (4) et à l'intérieur duquel cette bride périmétrique (14) est insérée en partie et tourne.

11. Le dispositif de filtrage de saumure conformément à la revendication 7, **caractérisé en ce qu'**un grattoir additionnel est aménagé pour gratter la surface extérieure de la paroi de filtrage additionnelle (13) du tambour de pré-filtrage additionnel (12) et une rampe est aménagée pour acheminer les déchets arrachés par ce grattoir additionnel vers un bac de récupération (20).

12. Le dispositif de filtrage de saumure conformément à la revendication 1, **caractérisé en ce que** cette unité de filtrage de sécurité (40) comporte au moins deux manchons de filtrage de sécurité (7) reliés à cette sortie (6) à travers des dispositifs à soupape indépendants respectifs (24), dont chacun est actionné par un mouvement pivotant d'un support (25) sur lequel est assemblé le manchon de filtre de sécurité correspondant (7) entre une position de travail dans laquelle le manchon de filtre de sécurité (7) est submergé dans la saumure dans le réservoir (5) et le dispositif à soupape correspondant (24) est ouvert et une position de nettoyage et d'entretien , dans laquelle le manchon de filtre de sécurité (7) est émergé de la saumure dans le réservoir (5) et le dispositif à soupape correspondant (24) est fermé, chaque support (25) étant relié à un corps volumineux (28) ayant une taille permettant de réduire le volume de saumure à l'intérieur du manchon de filtre de sécurité correspondant (7).

13. Le dispositif de filtrage de saumure conformément à la revendication 12, **caractérisé en ce que** chaque manchon de filtre de sécurité (7) est communiqué avec la sortie (6) à travers un conduit intérieur (26) formé dans ce corps volumineux (28) et dans le support (25), ce conduit intérieur (26) ayant une ou plusieurs sorties (27) situées de façon à ce qu'elles se trouvent au-dessus du niveau de la saumure dans le réservoir (5) lorsque le support (25) se trouve dans la position de nettoyage et de maintenance, en permettant une extraction du manchon de filtre de sécurité (7) par glissement axial le long du support (25) sans le risque que la saumure ne pénètre
dans le dispositif à soupape (24) lorsque le support (25) se trouve dans la position de nettoyage et d'entretien.

14. Le dispositif de filtrage de saumure conformément à la revendication 12 ou 13, **caractérisé en ce qu'**un corps de base du dispositif à soupape (24) est retenu dans une situation de fonctionnement à l'intérieur du réservoir (5) par un loquet (29) pouvant être ouvert manuellement pour permettre de retirer l'ensemble formé par le dispositif à soupape (24), les supports (25) et les corps volumineux (26) du tank (5).

15. Le dispositif de filtrage de saumure conformément à la revendication 1 ou 8, **caractérisé en ce que** el fond du bassin (4) et/ou le fond du compartiment additionnel (4a) du bassin (4) est relié au réservoir (5) de l'unité de filtrage de sécurité (40) au moyen d'un tuyau de drainage (31) comprenant une soupape (32).
